# EUROPEAN PATENT APPLICATION

(11) **EP 4 507 075 A1**
(43) Date of publication of application: **12.02.2025**
(21) Application number: 23778469.9
(22) Date of filing: 31.03.2023
(51) Int. Cl.: H01M 50/103, H01M 50/15, H01M 50/166, H01M 50/169

(54) **BATTERY CASING AND BATTERY**

(30) Priority: 01.04.2022 CN 202220774022 U
(71) Applicant: BYD Company Limited, Shenzhen, Guangdong 518118 (CN)
(72) Inventor: LIANG, Liwei, Shenzhen, Guangdong 518118 (CN); TANG, Guosheng, Shenzhen, Guangdong 518118 (CN); MA, Chenchong, Shenzhen, Guangdong 518118 (CN); ZHANG, Jian, Shenzhen, Guangdong 518118 (CN); OUYANG, Jinzhong, Shenzhen, Guangdong 518118 (CN)
(74) Representative: Mathys & Squire
(86) International application number: PCT/CN2023/085528
(87) International publication number: WO 2023/186105

(57) **Abstract**

A battery casing (10) and a battery (100), the battery casing (10) comprising: a casing body (11), an accommodating space (111) being defined in the casing body (11), the casing body (11) being provided with two open ends, and each open end being in communication with the accommodating space (111); a lower cover (12), the lower cover (12) being connected to one end of the casing body (11) for closing one open end; an upper cover (13), the upper cover (13) being connected to the other end of the casing body (11) for closing the other open end, the lower cover (12) and/or the upper cover (13) being a plate-shaped member(s), and side walls of the casing body (11) being perpendicular to the plate-shaped member(s).

## Description

### CROSS-REFERENCE TO RELATED APLICATIONS

The present disclosure is proposed on the basis of and claims priority to Chinese Patent Application No. 202220774022.3 filed on April 1, 2022, the disclosure of which is incorporated herein by reference in its entirety.

### FIELD

The present disclosure relates to the technical field of batteries, and specifically to a battery casing and a battery having the battery casing.

### BACKGROUND

A battery casing in related art includes a casing body and a cover, and the casing body includes a bottom plate and a side plate. The battery casing body is usually integrally formed by a stamping process. Due to the limitation caused by stress concentration in the process, a transition surface is inevitably formed between the bottom plate and the side plate in the process of preparing the casing body, so that the space corresponding to the transition surface cannot be fully utilized, reducing the energy density of the battery.

### SUMMARY

The present disclosure aims to solve one of the technical problems in related art at least to some extent.

To this end, an object of the present disclosure is to provide a battery casing, to solve the problems in related art that the space utilization rate is low and the energy density of a battery is low due to the existence of a transition surface.

Another object of the present disclosure is to provide a battery, having the battery casing.

According to a first aspect of the present disclosure, a battery casing is provided, including:
a casing body, where an accommodating space is defined in the casing body, the casing body has two open ends, and each open end is in communication with the accommodating space;
a lower cover, where the lower cover is connected to one end of the casing body and configured to close one open end; and
an upper cover, where the upper cover is connected to the other end of the casing body and configured to close the other open end.

The lower cover and/or the upper cover is/are a plate-shaped member(s), and side walls of the casing body are perpendicular to the plate-shaped member(s).

In the battery casing according to the present disclosure, by directly connecting the casing body to the upper cover and the lower cover, the connection between the casing body and the upper cover or between the casing body and the lower cover through a transition surface is avoided, thus reducing the influence of the transition surface on the battery dimension, and improving the energy density of the battery.

According to a second aspect of the present disclosure, a battery is provided, including: a battery casing, where the battery casing is the battery casing as described above.

Additional aspects and advantages of the present disclosure will be partly given in the following description, some of which will become apparent from the following description, or may be learned from practices of the present disclosure.

### BRIEF DESCRIPTION OF THE DRAWINGS

FIG. 1 is an exploded view of a battery provided in related art;
FIG. 2 is a schematic three-dimensional structural view of a battery casing according to an embodiment of the present disclosure;
FIG. 3 is a schematic three-dimensional structural view of a battery casing according to another embodiment of the present disclosure;
FIG. 4 is a side view of a battery casing according to an embodiment of the present disclosure;
FIG. 5 is a top view of a battery casing according to an embodiment of the present disclosure;
FIG. 6 is a cross-sectional view of a battery casing before welding according to an embodiment of the present disclosure;
FIG. 7 is an enlarged view of an encircled region C in FIG. 6;
FIG. 8 is an enlarged view of an encircled region D in FIG. 6.
FIG. 9 is a cross-sectional view of a battery casing after welding according to an embodiment of the present disclosure;
FIG. 10 is an enlarged view of an encircled region E in FIG. 9;
FIG. 11 is an enlarged view of an encircled region F in FIG. 9;
FIG. 12 is an exploded view of a battery casing viewed from a perspective according to another embodiment of the present disclosure;
FIG. 13 is an exploded view of a battery casing viewed from another perspective according to another embodiment of the present disclosure;
FIG. 14 is a cross-sectional view showing an exploded structure of a battery casing according to another embodiment of the present disclosure;
FIG. 15 is a cross-sectional view of a battery casing before welding according to another embodiment of the present disclosure;
FIG. 16 is an enlarged view of an encircled region G in FIG. 15;
FIG. 17 is a cross-sectional view of a battery casing after welding according to another embodiment of the present disclosure;
FIG. 18 is an enlarged view of an encircled region H in FIG. 17;
FIG. 19 is a cross-sectional view of a battery along a direction A-A according to an embodiment of the present disclosure;
FIG. 20 is a cross-sectional view of a battery along a direction B-B according to an embodiment of the present disclosure;
FIG. 21 is a top view of an electrode core in a battery according to an embodiment of the present disclosure;
FIG. 22 is a schematic view of assembling a battery casing assembled with a rivet a second insulating sheet, a first insulating sheet and a metal sheet viewed from a perspective according to an embodiment of the present disclosure;
FIG. 23 is a schematic view of assembling a battery casing assembled with a rivet a second insulating sheet, a first insulating sheet and a metal sheet viewed from another perspective according to an embodiment of the present disclosure;
FIG. 24 is a cross-sectional view showing a battery casing assembled with a rivet, a second insulating sheet, a first insulating sheet and a metal sheet according to an embodiment of the present disclosure; and
FIG. 25 is an enlarged view of an encircled region I in FIG. 24;

### DETAILED DESCRIPTION

Various exemplary embodiments of the present disclosure are now be described in detail with reference to the accompanying drawings. It is to be noted that unless otherwise specifically specified, the relative arrangement, numerical expressions, and numerical values of components and steps described in the embodiments do not limit the scope of the present disclosure.

The following descriptions of at least one exemplary embodiment are merely illustrative, and do not constitute any limitation on the present disclosure and application or use thereof in any way.

Technologies, methods, and devices known to those of ordinary skill in related art may not be discussed in detail, but where appropriate, the technologies, the methods, and the devices should be considered as a part of the specification.

In all examples shown and discussed herein, any specific value should be construed to be merely exemplary, and not as limitations. Therefore, other examples of exemplary embodiments may have different values.

It should be noted that similar reference numerals and letters indicate similar items in the following drawings. Therefore, once an item is defined in a drawing, it has no need to be discussed further in the following drawings.

The present disclosure is an invention made by the present inventor based on the following facts.

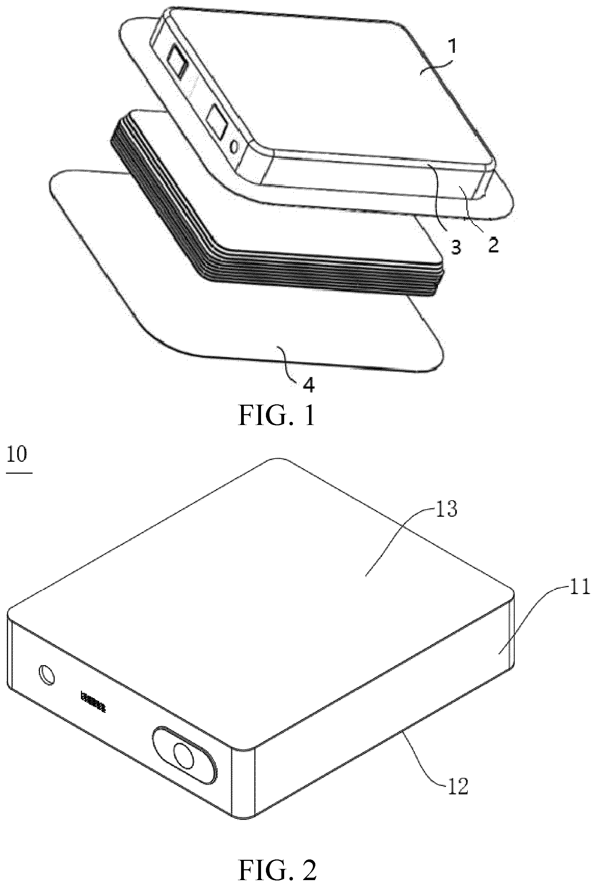

FIG. 1 shows a battery casing in related art.

As shown in FIG. 1, the battery casing includes a casing body and a cover 4.The casing body includes a bottom plate 1 and a side plate 2, where the bottom plate 1 and the side plate 2 are connected through an arc-shaped transition surface 3.

The above battery casing has the following defects. As the casing body is integrally formed by a stamping process, to avoid stress concentration in the process, the arc-shaped transition surface 3 is inevitable in the machining process, and this part of space cannot be fully utilized, reducing the energy density of the battery.

Based on this, after long-term research and experiments, the following inventions are creatively obtained by the present inventor.

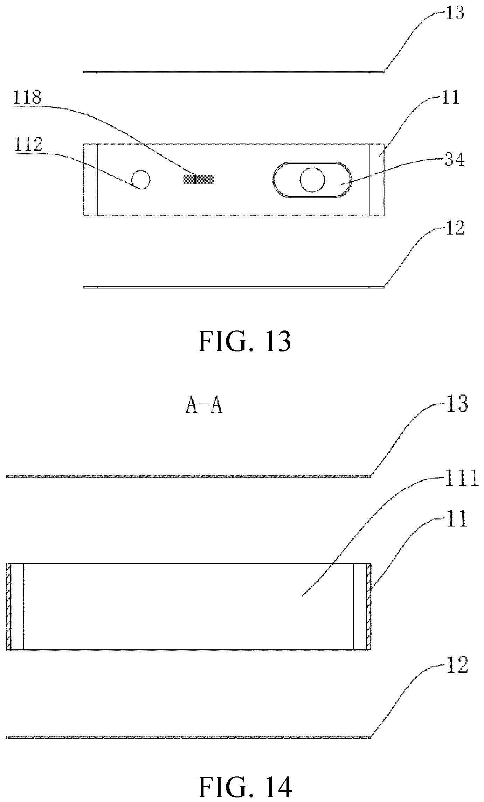

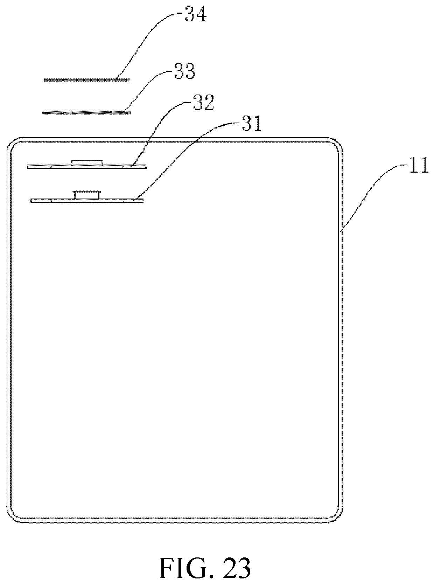

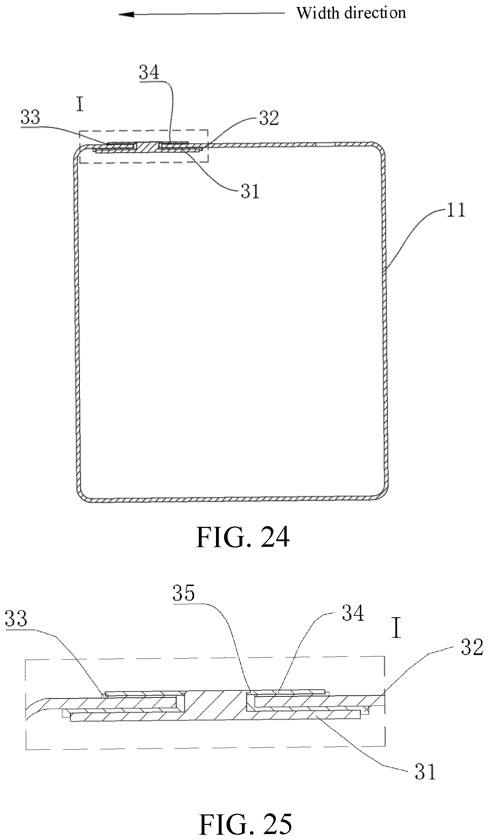

As shown in FIGs. 2 to 25, a battery casing 10 according to an embodiment of the present disclosure includes a casing body 11, a lower cover 12 and an upper cover 13.

Specifically, an accommodating space 111 is defined in the casing body 11, the casing body 11 has two open ends, each open end is in communication with the accommodating space 111, the lower cover 12 is connected to one end of the casing body 11 and configured to close one open end, and the upper cover 13 is connected to the other end of the casing body 11 and configured to close the other open end. The lower cover 12 and/or the upper cover 13 is/are a plate-shaped member(s), and side walls of the casing body 11 are perpendicular to the plate-shaped member(s).

In other words, the battery casing 10 according to the embodiment of the present disclosure consists essentially of the casing body 11, the lower cover 12 and the upper cover 13. The battery casing 10 may be made of a metal material such as stainless steel, a nickel alloy or a chromium alloy. The accommodating space 111 is defined in the casing body 11, and an electrode core is accommodated in the accommodating space 111. In this embodiment, the electrode core can be a wound electrode core or a stacked electrode core. The electrode core includes a positive electrode sheet 21, a negative electrode sheet 22, and a separator 23. The lower cover 12 and/or the upper cover 13 is/are a plate-shaped member(s), and side walls of the casing body 11 are perpendicular to the plate-shaped member(s). When one open end is closed by the lower cover 12, the lower cover 12 is directly connected to a lower end of the casing body 11. Namely, the lower cover 12 and the casing body 11 are directly connected, no transition portion is arranged therebetween, and there is no transition surface, which not only improve the external aesthetics of the battery casing 10, but also reduce the influence of the transition surface on the dimension of the electrode core arranged in the accommodating space 111, to improve the energy density of the battery 100. Similarly, when the other open end is closed by the upper cover 13, the upper cover 13 is directly connected to the casing body 11, and no transition surface is arranged therebetween, which will not be described here again.

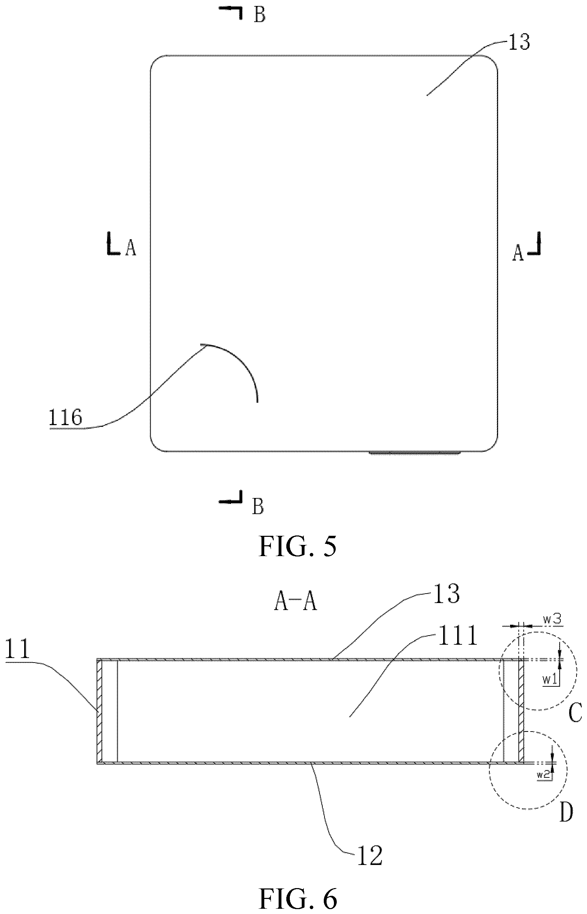

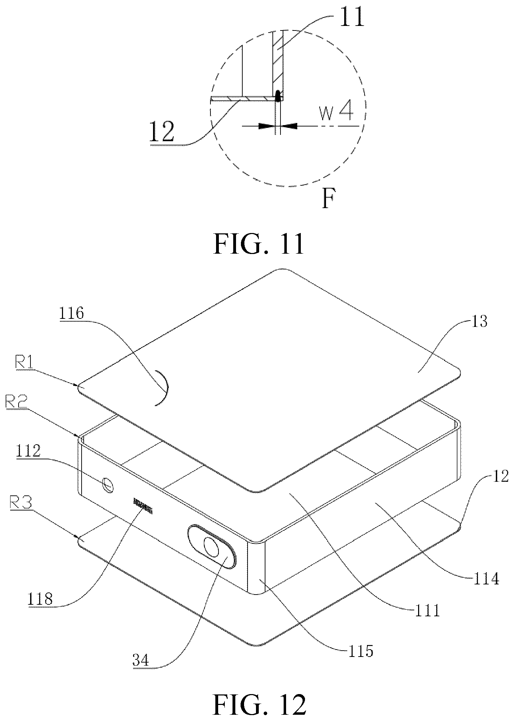

As shown in FIGs. 6 and 12, the casing body 11 has two open ends respectively communicating with the accommodating space 111. For ease of description, the two open ends can be a first open end and a second open end. The first open end is closed by the lower cover 12, and the second open end is closed by the upper cover 13.Optionally, the lower cover 12 is arranged opposite to the upper cover 13, the accommodating space 111 is a linear mounting channel, the first open end may be located above of the mounting channel in an axial direction, and the second open end may be located below the installation channel in the axial direction.

When the first open end is closed by the lower cover 12, the lower cover 12 is directly connected to a lower end of the casing body 11. Namely, the lower cover 12 and the casing body 11 are directly connected, no transition portion is arranged therebetween, and there is no transition surface, which not only improve the external aesthetics of the battery casing 10, but also reduce the influence of the transition surface on the dimension of the electrode core arranged in the accommodating space 111, to improve the energy density of the battery 100. Similarly, when the second open end is closed by the upper cover 13, the upper cover 13 is directly connected to the casing body 11, and no transition surface is arranged therebetween, which will not be described here again.

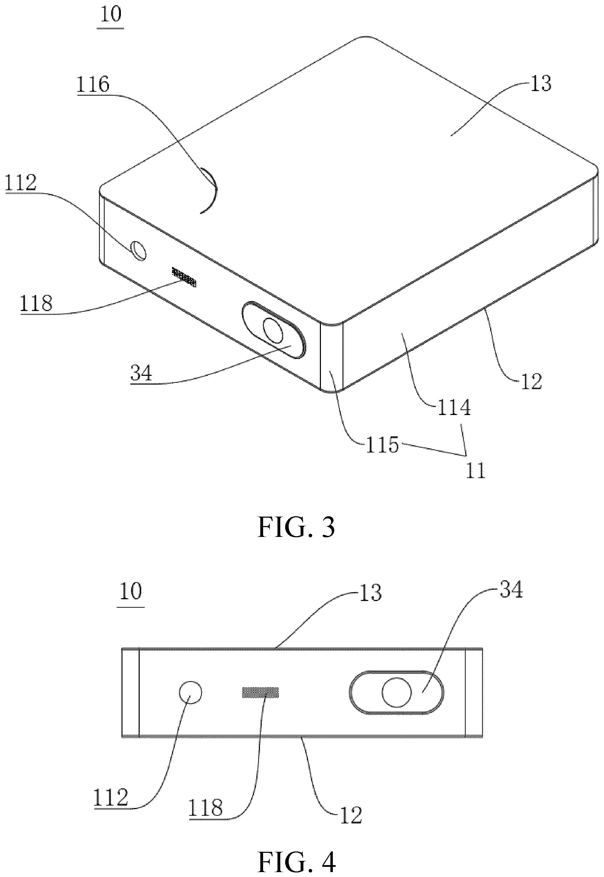

As shown in FIGs. 4 and 6, the lower cover 12 and/or the upper cover 13 is/are a plate-shaped member(s), and side walls of the casing body 11 are perpendicular to the plate-shaped member(s). Namely, at least one of the lower cover 12 and the upper cover 13 is a plate-shaped member, and an extending direction of the plate-shaped member is perpendicular to the side walls of the casing body 11. For example, the plate-shaped member extends in a horizontal direction, and the casing body 11 extends in a vertical direction. The thickness of the plate-shaped member can be set to be a uniform thickness. At this time, an included angle between an outer surface of the plate-shaped member and an outer surface of the casing body 11 can be 90°, and an included angle between an inner surface of the plate-shaped member and the outer surface of the casing body 11 can also be 90°. When the thickness of the casing body 11 is also a uniform thickness, each surface of the plate-shaped member is perpendicular to the inner and outer surface of the casing body 11.

In some specific embodiments of the present disclosure, the casing body 11 is welded with the upper cover 13 and/or the lower cover 12. Namely, the casing body 11 may be welded with at least one of the upper cover 13 and the lower cover 12. During a specific welding process, by image positioning using a CCD camera, the upper cover 13 or the lower cover 12 is lapped with the casing body 11, and fastened by a fixture, and then the battery casing 10 is sealed by laser welding.

In this embodiment, by welding the casing body 11 with the upper cover 13, no transition surface is formed between the casing body 11 and the upper cover 13, and direct connection between the casing body 11 and the upper cover 13 is realized. Similarly, by welding the casing body 11 with the lower cover 12, the direct connection between the casing body 11 and the lower cover 12 can also be realized, which will not be described here again.

Compared with the related art, the upper cover 13 is directly connected to the casing body 11 and the lower cover 12 is directly connected to the casing body 11 in the present disclosure, to avoid the formation of a transition surface, for example, an arc-shaped transition surface, between the upper cover 13 and the casing body 11 and between the lower cover 12 and the casing body 11. By means of the directly connected structure, the space inside the battery casing 10 can be fully used in the present disclosure.

Therefore, in the battery casing 10 according to the embodiment of the present disclosure, by directly connecting the casing body 11 with the upper cover 13 and the lower cover 12, the connection between the casing body 11 and the upper cover 13 or between the casing body 11 and the lower cover 12 through a transition surface is avoided, thus reducing the influence of the transition surface on the battery 100 dimension, and improving the energy density of the battery 100.

In some specific embodiments of the present disclosure, as shown in FIGs. 6 to 8, the lower cover 12 and/or the upper cover 13 is/are a plate-shaped member(s), the thickness of the plate-shaped member is less than the wall thickness of the casing body 11. For example, when the lower cover 12 is a plate-shaped member, the thickness of the lower cover 12 is smaller than that of the casing body 11; and when the upper cover 13 is a plate-shaped member, the thickness of the upper cover 13 is less than that of the casing body 11. In this embodiment, by defining the thickness of the plate-shaped member to be smaller than the wall thickness of the casing body 11, the thickness of the upper cover 13 and the lower cover 12 can be reduced. Additionally, the thickness of the casing body 11 is larger than that of the upper cover 13 and the lower cover 12. Due to the large wall thickness, when an electrolyte injection hole 112 and a conductive connection region are defined on the casing body 11, a positive electrode conductive connector can be conveniently mounted or welded. Meanwhile, since the area of a weldable region between the upper cover 13 or the lower cover 12 and the casing body 11 is unchanged, this embodiment can not only ensure the sealing performance between the upper cover 13 or the lower cover 12 and the casing body 11, but also reduce the thickness of the battery, to improve the space utilization.

For ease of description, the thickness of the upper cover 13 can be defined as w1, the thickness of the lower cover 12 is defined as w2, and the thickness of the casing body 11 is defined as w3. When w1 < w3, that is, the thickness of the upper cover 13 is smaller than that of the casing body 11, the area of a connection region between the upper cover 13 and the casing body 11 is ensured to improve the connection robustness between the casing body 11 and the upper cover 13, and the thickness of the upper cover 13 is reduced, to improve the space utilization of the battery. For example, the thickness of the upper cover 13 and the thickness of the battery 100 can be reduced, to reduce the space occupied by the battery casing 10, and improve the space utilization of the battery. Similarly, when w2 < w3, the space utilization of the battery can be improved while the sealing performance between the lower cover 12 and the casing body 11 is ensured, which will not be described here again.

Optionally, 30µm≤w1≤100µm, 30µm≤w2≤100µm, 100µm<w3≤200µm, By adopting the upper cover 13, the lower cover 12 and the casing body 11 with a thickness of the above numerical ranges, the structural strength is ensured, and the reliability of connection is ensured. The thickness of the upper cover 13 and the lower cover 12 may be different or the same, and can be specifically set according to actual needs.

According to an embodiment of the present disclosure, as shown in FIGs. 2-3, an accommodating space 111 is defined in the casing body 11, the casing body 11 has two open ends, each open end is in communication with the accommodating space 111, an electrolyte injection hole 112 and a conductive connection region are provided on the casing body 11, the lower cover 12 is connected to one end of the casing body 11 and configured to close one open end, and the upper cover 13 is connected to the other end of the casing body 11 and configured to close the other open end. Of course, the electrolyte injection hole 112 can also be provided on the upper cover 12 or the lower cover 13. In this case, the conductive connection region may be provided together with the electrolyte injection hole 112 on the upper cover 12 or the lower cover 13, or on the casing body 11 as desired. This specifically depends on the arrangement of polarity of the electrode core accommodated in the accommodating space 111.

On the casing body 11, the upper cover 12 or the lower cover 13 is provided with the electrolyte injection hole 112 and the conductive connection region. An electrolyte can be injected into the accommodating space 111 through the electrolyte injection hole 112. The conductive connection region may include a positive electrode connection region 117 and a negative electrode connection region 118. The positive electrode connection region 117 can be used for a component provided at a through hole on the casing body 11, and the negative electrode connection region 118 may be a partial area on the casing body 11. A positive electrode tab on the electrode core is electrically connected to a positive electrode conductive connector on the positive electrode connection region 117, and a negative electrode tab 24 on the electrode core may be electrically connected to an inner wall surface of the casing body 11 corresponding to the negative electrode connection region 118.

According to an embodiment of the present disclosure, at least a part of an outer periphery of the open end exceeds an outer periphery of the corresponding lower cover 12 or upper cover 13. For example, an edge of an upper end face of the second open end exceeds an edge of the upper cover 13. An edge of a lower end face of the first open end exceeds an edge of the lower cover 12.

Hereinafter, the upper cover 13 is used as an example for description. A part of the upper end face of the second open end is overlapped with a lower end face of the upper cover 13, and the width of the overlapping area is defined as h2. It should be noted that the overlapping area here refers to an overlapping part of an orthographic projection of the upper cover 13 with an orthographic projection of the upper end face of the second open end is the overlapping area, when the orthographic projection of the upper cover 13 is compared with the orthographic projection of the upper end face of the second open end in a top-down direction. The width of the corresponding overlapping area refers to a width h2 of the overlapping area in an inside-outside direction. Here, the inside refers to a direction near the accommodating space 111, and the outside refers to a direction near the outside of the battery casing 10.

Additionally, when the thickness of the casing body 11 is uniform, the thickness of the casing body 11 can be defined as w3. At this time, the relationship between the width h2 of the overlapping area and the thickness w3 of the casing body 11 can be defined as: ½w3≤h2≤w3. By defining the above numerical range, the strength of the casing body 11 supporting the upper cover 13 can be effectively ensured. Similarly, a part of the lower end surface of the first open end is defined to be overlapped with the upper end surface of the lower cover 12, the width of the corresponding overlapping region can also be defined as h2, and the relationship between the overlapping area and the width of the lower end face of the first open end is defined, to ensure the strength of the casing body 11 supporting the lower cover 12, which will not be described here again.

According to an embodiment of the present disclosure, a notch 14 is formed between the outer periphery of the open end and the outer periphery of the corresponding lower cover 12 or the upper cover 13, the casing body 11 is connected with the lower cover 12 or the upper cover 13 corresponding to the open end by laser welding, and a portion of a weld joint 113 formed by welding is located in the notch 14.

For ease of description, the upper cover 13 is used as an example for description below. a step is formed between a part of the upper end face of the second open end and an upper end face of the upper cover 13. Particularly, a part of the upper end face of the second open end is overlapped with the lower end face of the upper cover 13, the outer periphery of another part of the upper end face of the second open end exceeds an outer edge of the upper cover 13, and a step is formed between the upper end face of the second open end and the upper end face of the upper cover 13, that is, a notch 14 is formed.

Optionally, ½w3≤h2≤¾w3. By adopting a size relationship in this range, it is possible to ensure the reliability of connection of the upper cover 13 and the lower cover 12 with the casing body 11 while the notch 14 is present.

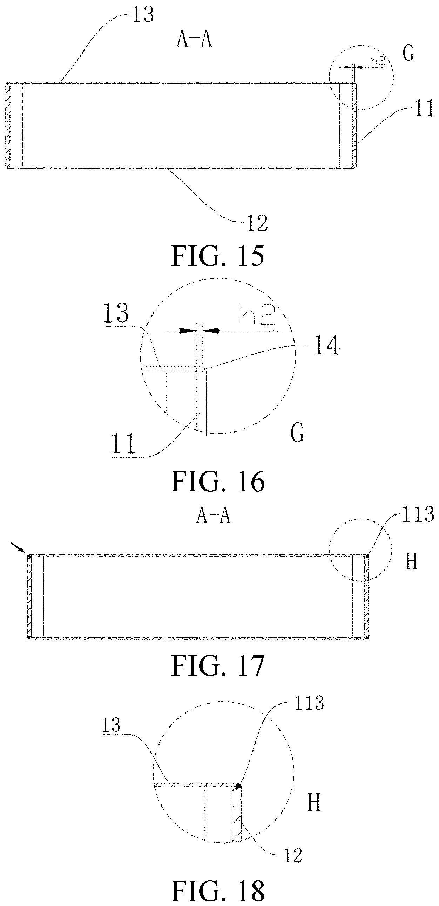

When the notch 14 is formed between the upper cover 13 and the second open end, the welding can be carried out obliquely from above (as indicated by the arrow in FIG. 17). The direction of light emission and the intensity of welding can be controlled to form a protrusion of the weld joint 113 at the notch 14. Post-treatment of the protrusion is not required, and the overall height or width of the battery casing 10 will not be increased. The angle between the welding direction and the second open end can be determined according to the size of the notch 14 and the welding strength, which is not limited herein. Similarly, when the notch 14 is formed between the lower cover 12 and the casing body 11, welding can be carried out in the above manner at the position of the notch 14, which will not be described here again.

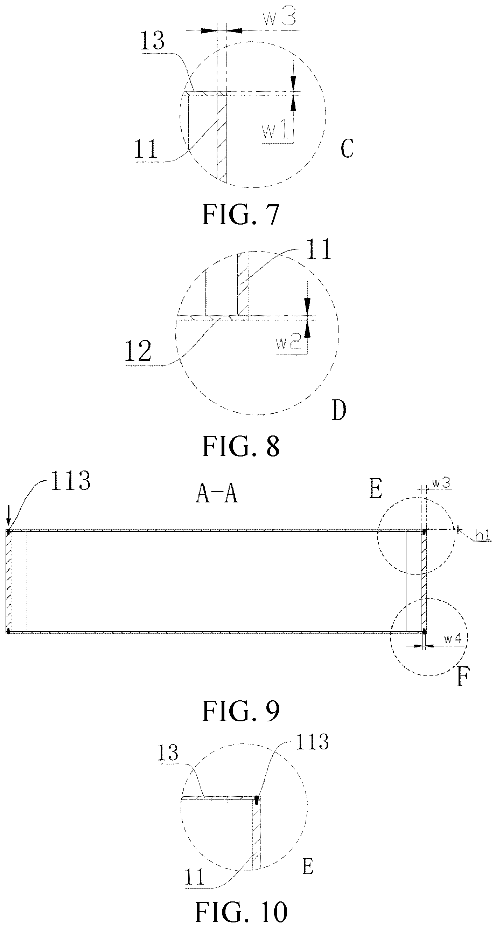

In some specific embodiments of the present disclosure, as shown in FIGs. 7 and 8, the outer periphery of the open end is leveled with the outer periphery of the corresponding lower cover 12 or upper cover 13. The upper cover 13 is used as an example for description below. The outer periphery of the second open end is leveled with the outer periphery of the upper cover 13, and the width of the overlapping area between the upper end face of the second open end and the lower end face of the upper cover 13 is equal to the thickness of the upper end face of the second open end. When the casing body 11 has a structure with a uniform thickness, the width of the overlapping area may be equal to the thickness of the casing body 11, that is, h2=w3.

According to an embodiment of the present disclosure, as shown in FIGs. 10 to 11, the open end is connected with the corresponding lower cover 12 or upper cover 13 by laser welding. The weld joint 113 formed by welding extends through the lower cover 12 or the upper cover 13 corresponding to the open end to the casing body 11. The width of the weld joint 113 can be defined as w4. The upper cover 13 is used as an example for description below. The upper end face of the second open end is completely overlapped with the lower end face of the upper cover 13. That is, the lower end face of the upper cover 13 completely covers the upper end face of the second open end, and the outer periphery of the upper cover 13 is leveled with the outer periphery of the second open end, namely, h2=w3. At this time, during the welding process, the welding can be carried out along a direction from the upper cover 13 to the casing body 11. For example, the upper cover 13 is located above the casing body 11. When the upper cover 13 is welded to the casing body 11, the welding can be carried out vertically in a top-down direction, as indicated by the arrow in FIG. 9. A weld joint 113 is formed during welding, and the weld joint 113 can penetrate the upper cover 13 and extend into the casing body 11, to form a hermetic connection between the upper cover 13 and the casing body 11. Similarly, when the lower cover 12 is located below the casing body 11, the lower cover 12 and the casing body 11 can also be fixed by welding in a down-top direction, which will not be described here again.

Further, ½w3≤w4≤½w3. By adopting a numerical relationship in this range, foreign bodies generated in the laser welding process can be prevented from damaging the electrode core accommodated in the accommodating space 111.

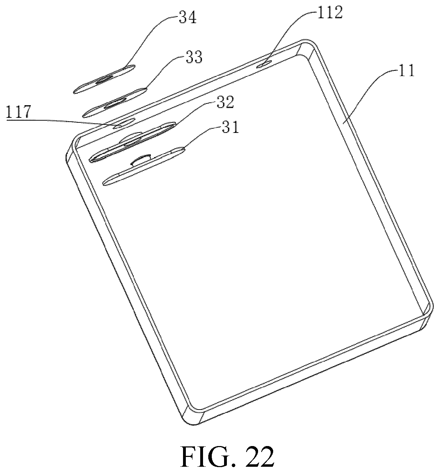

According to an embodiment of the present disclosure, as shown in FIGs. 12 and 22, the casing body 11 has an arc segment along its circumferential direction, and the outer contour of the lower cover 12 and/or the upper cover 13 is the same in shape as that of the casing body 11. For example, the outer surface of the casing body 11 includes multiple side surfaces, and the side surface may be a straight side wall surface 114 or an arc-shaped side wall surface 115. When the shape of the cross section of the casing body 11 is roughly rectangular, the side wall may include four straight side wall surfaces 114 and four arc-shaped side wall surfaces 115, one arc-shaped side wall surface 115 is arranged between two adjacent straight side wall surfaces 114. Namely, two adjacent straight side wall surfaces 114 can be connected by one arc-shaped side wall surface 115. During production, the casing body 11 can be formed by bending a steel plate, and welding the steel plate end to end. Because the steel plate itself has a strength, an arc-shaped side wall surface 115 will naturally be formed during the bending process of the steel plate. That is, when the casing body 11 is manufactured by bending, the arc-shaped side wall surface 115 is produced. By manufacturing the casing body 11 by bending, the difficulty in manufacturing the casing body 11 can be reduced.

In this embodiment, the outer periphery of the casing body 11 has an arc segment, which reduces the manufacturing difficulty of the casing body 11. By defining the shape of the outer contour of the upper cover 13 and/or the lower cover 12 to be consistent with the outer contour of the casing body 11, the aesthetics of the appearance is improved, and the material is saved.

Optionally, the radius of the fillet of the arc-shaped side wall surface 115 of the casing body 11 is defined as R2, where 0.2mm≤R2. For the purpose of assembling correspondingly, the upper cover 13 and the lower cover 12 can also be provided with a fillet having a radius and R1 and a radius R3 respectively. Meanwhile, to further improve the space utilization inside battery casing 10, the positive electrode sheet 21 and/or the negative electrode sheet 22 may also be provided with a fillet having a radius R4, where R1, R2, R3 and R4 can be consistent.

In some specific embodiments of the present disclosure, as shown in FIG. 12, the outer surface of the casing body 11 includes multiple side surfaces connected in sequence, and the areas of the upper cover 13 and the lower cover 12 are respectively larger than that of each side surface. It should be noted that to improve the sealing performance between the casing body 11 and the upper cover 13 or the lower cover 12, the casing body 11 needs to have a large thickness, so as to increase the area of the connected region, for example, the area of the welded region. If the casing body 11 is designed to have a large-area structure, the space occupied by the battery casing 10 will be increased, which is adverse to the improvement of the energy density of the battery 100. Particularly, the side wall of the casing body 11 may include multiple sequentially adjacent side wall members, for example, two first side wall members extending in a length direction and two second side wall members extending in a width direction. The area of the upper cover 13 and the lower cover 12 is respectively larger than that of each side wall member. Namely, the upper cover 13 and the lower cover 12 respectively correspond to a large surface of the electrode core, and the casing body 11 corresponds to a small surface of the electrode core, where the area of the large surface of the electrode core is larger than that of the small surface of the electrode core.

According to an embodiment of the present disclosure, as shown in FIGs. 3 and 12, the upper cover 13 or the lower cover 12 is provided with an explosion-proof score 116. During the charging and discharging process of the battery 100, the electrode core tends to expand in a thickness direction of the battery 100. When the pressure exceeds an upper limit, the battery 100 may explode. Therefore, since the thickness of the bottom of the explosion-proof score 116 is smaller than that of other portions, when the pressure inside the battery 100 increases, the explosion-proof score 116 will crack to exhaust gas, thereby preventing explosion of the battery 100, and improving the safety of the battery 100. Optionally, the explosion-proof score 116 is arranged on an outer surface of the upper cover 13, and the direction of the fillet of the explosion-proof score 116 is opposite to the direction of the fillet of a top corner of the upper cover 13 closest to the explosion-proof score 116. The explosion-proof score 116 may be an arc-shaped groove, where the length of the arc can range from ¼ circle to ¾ circle, the radius of the circle is defined as R5, for example, 3mm≤R5≤6mm.

The present disclosure further discloses a battery 100. The battery 100 includes a battery casing 10 and an electrode core, where the battery casing 10 is a battery casing 10 according to any of the above embodiments. The conductive connection region includes a positive electrode connection region 117 and a negative electrode connection region 118. The positive electrode connection region 117 can be used for a component provided at a through hole on the casing body 11, and the negative electrode connection region 118 may be a partial area on the casing body 11. The electrode core is arranged in the accommodating space 111, and the electrode core includes a positive electrode tab and a negative electrode tab 24 arranged on the electrode core. The positive electrode tab is electrically connected to the positive electrode connection region 117, and the negative electrode tab 24 is electrically connected to the negative electrode connection region 118. In this embodiment, the electrode core can be prepared by winding or stacking.

The negative electrode tab 24 can be directly welded to an inner wall of the casing body 11 corresponding to the negative electrode connection region 118. Particularly, the negative electrode tab 24 may be gathered and then welded onto the inner wall corresponding to the negative electrode connection region 118. Therefore, the negative electrode tab 24 and the casing body 11 are electrically connected.

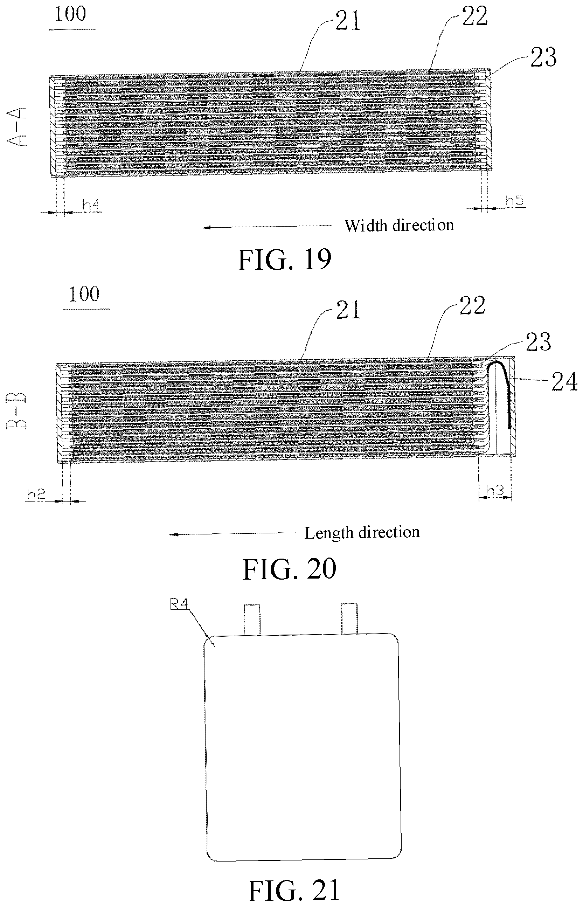

Optionally, as shown in FIGs. 19, 20, 22 to 25, the positive electrode conductive connector includes a first insulating sheet 33 and a metal sheet 34 arranged outside of the battery casing 10, and a rivet 31 and a second insulating sheet 32 arranged inside the battery casing 10. Namely, in an inside-outside direction, the rivet 31, the second insulating sheet 32, the casing body 11, the first insulating sheet 33 and the metal sheet 34 are arranged in sequence, The metal sheet 34, the first insulating sheet 33 and the second insulating sheet 32 are all provided with a through hole. The rivet 31 can extend through the second insulating sheet 32, the first insulating sheet 33, the casing body 11 and the metal sheet 34 sequentially, and finally the rivet 31 is fixed and electrically connected to the metal sheet 34 by pressing by a force. Additionally, the positive electrode tab is gathered and then welded to the rivet 31. In the width direction of the battery 100, the width of the first insulating sheet 33 is ≥ the width of the metal sheet 34, and the width of the second insulating sheet 32 is ≥ the width of the rivet 31, so as to avoid the contact of the rivet 31 or the metal sheet 34 with the casing body 11. Meanwhile, left ends of the first insulating sheet 33 and the second insulating sheet 32 cannot exceed an intersecting position of the arc-shaped surface with the side surface of the casing body 11 to avoid poor sealing. The first insulating sheet 33 and the second insulating sheet 32 can electrically insulate the rivet 31 from the casing body 11, to avoid the occurrence of short circuit. Meanwhile, the first insulating sheet 33 and the second insulating sheet 32 can improve the sealing performance in the positive electrode connection region 117, to avoid the leakage of electrolyte.

The metal sheet 34 may be provided with a stepped groove 35 at a position riveted with the rivet 31, When the rivet 31 is pressed, an end of the rivet 31 can be accommodated in the groove, to ensure that the end face of the pressed rivet 31 does not exceed the upper end face of the metal sheet 34. This facilitates a subsequent welding operation when the battery 100 is assembled into a module. The metal sheet 34 and the rivet 31 can be made of aluminum, nickel, copper and other materials.

According to an embodiment of the present disclosure, the electrode core is a stacked electrode core. It should be noted that since the space utilization rate is higher in the case of a stacked structure, the stacked structure is adopted in this embodiment. When the stacked structure is adopted, the electrode core may include a negative electrode sheet 22, a separator 23 and a positive electrode sheet 21 stacked in sequence. For example, the stacked electrode core has a roughly cubic shape, and the battery casing 10 mainly defined by the lower cover 12, the casing body 11 and the upper cover 13 may also have a roughly cubic shape. Correspondingly, the accommodating space 111 also has a roughly cubic shape, to adapt to the stacked structure.

According to an embodiment of the present disclosure, as shown in FIGs. 12, and 19-20, the stacking direction of the electrode core is parallel to an axial direction of the electrolyte injection hole. Specifically, the electrode core may be stacked along a direction perpendicular to the upper cover 12 or the lower cover 13, and the electrolyte injection hole is provided on the upper cover 12 or the lower cover 13. The electrode core may also be stacked along a direction parallel to the upper cover 12 or the lower cover 13, and the electrolyte injection hole is provided on the casing body 11. The stacking direction of the electrode core is parallel to the axial direction of the electrolyte injection hole, so that the electrolyte can flow rapidly through the stacked electrode core, to well infiltrate the electrode core.

In some specific embodiments of the present disclosure, the electrode core includes multiple positive electrode sheets 21 and multiple negative electrode sheets 22. A positive electrode tab member is arranged at one end of each positive electrode sheet 21, and a negative electrode tab member is arranged at one end of each negative electrode sheet 22. The distance between one end of the negative electrode sheet 22 and the inner wall surface of the casing body 11 is a first distance. The distance between the other end of the negative electrode sheet 22 and the inner wall surface of the casing body 11 is a second distance. The sum of the first distance and the second distance is not less than 2 mm, and not more than 5 mm.

In other words, because the negative electrode active material layer needs to completely wrap the positive active material layer, the size of the negative electrode sheet is defined in this embodiment. In the length direction of the battery 100, the distance between a lower end portion of the negative electrode sheet and the casing body 11 is defined as h2, and the distance between an upper end portion of the negative electrode sheet and the casing body 11 is defined as h3. By defining h2>0, H3>0, and 2mm≤h2+h3≤5mm, the contact between the negative electrode sheet and the casing body 11 is avoided, to avoid the folding of the electrode sheet, and ensure that enough welding space is reserved for the tab. Additionally, in the width direction of the battery 100, the distance between a left end portion of the negative electrode sheet and the casing body 11 is h4, and the distance between a right end portion of the negative electrode sheet and the casing body 11 is h5. By defining h4>0 and h5>0, the contact between the negative electrode sheet and the casing body 11 is avoided, to avoid the folding of the electrode sheet.

In summary, the battery casing 10 according to the embodiment of the present disclosure includes the upper cover 13, the casing body 11 and the lower cover 12. The lower cover 12 and the upper cover 13 are both directly connected to the casing body 11, for example, in a perpendicular relation, such that there is no need to arrange a transition surface between the casing body 11 and the upper cover 13 and between the casing body 11 and the lower cover 12, thus reducing the influence of the transition surface on the battery 100 dimension, and improving the energy density of the battery 100. The battery 100 according to the embodiment of the present disclosure includes the battery casing 10 according to any of the above embodiments, and the battery casing 10 according to the embodiment of the present disclosure has the advantage of large accommodating space 111 and capability to accommodating electrode cores of large energy density. Therefore, the battery 100 according to the embodiment of the present disclosure also has the above advantages, whereby the energy density of the battery 100 is improved. This will not be described here again.

Although some specific embodiments of the present disclosure have been described in detail by way of examples, a person skilled in the art should understand that the foregoing examples are merely for description, and not intended to limit the scope of the present disclosure. A person skilled in the art should appreciate that modifications can be made to the foregoing embodiments without departing from the scope and spirit of the present disclosure. The scope of the present disclosure is defined by the appended claims.

## Claims

1. A battery casing (10), comprising:
a casing body (11), an accommodating space (111) being defined in the casing body (11), the casing body (11) having two open ends, and each open end being in communication with the accommodating space (111);
a lower cover (12), the lower cover (12) being connected to one end of the casing body (11) and configured to close one open end; and
an upper cover (13), the upper cover (13) being connected to the other end of the casing body (11) and configured to close the other open end,
the lower cover (12) and/or the upper cover (13) being a plate-shaped member(s), and side walls of the casing body (11) being perpendicular to the plate-shaped member(s).

2. The battery casing (10) according to claim 1, wherein the thickness of the plate-shaped member is less than a wall thickness of the casing body (11).

3. The battery casing (10) according to claim 1 or 2, wherein 30µm≤w1≤100µm, 30µm≤w2≤100µm, and 100µm<w3≤200µm, wherein w1, w2 and w3 are respectively the thickness of the upper cover (13), the lower cover (12) and the casing body (11).

4. The battery casing (10) according to any one of claims 1 to 3, wherein the casing body (11) is provided with an electrolyte injection hole (112) and a conductive connection region.

5. The battery casing (10) according to any one of claims 1 to 3, wherein the upper cover (13) or the lower cover (12) is provided with an electrolyte injection hole (112), and the casing body (11) is provided with a conductive connection region.

6. The battery casing (10) according to any one of claims 1 to 5, wherein at least a part of an outer periphery of the open end exceeds an outer periphery of the corresponding lower cover (12) or upper cover (13).

7. The battery casing (10) according to claim 6, wherein ½w3≤h2≤w3, in which h2 is the width of an overlapping area between the upper cover (13) or the lower cover (12) and the casing body (11), and w3 is the thickness of the casing body (11).

8. The battery casing (10) according to claim 7, wherein a notch (14) is formed between the outer periphery of the open end and the outer periphery of the corresponding lower cover (12) or upper cover (13), the casing body (11) is welded with the lower cover (12) or the upper cover (13) corresponding to the open end by laser welding, and a portion of a weld joint (113) formed by welding is located in the notch (14).

9. The battery casing (10) according to claim 8, wherein ½w3≤h2≤¾w3.

10. The battery casing (10) according to any one of claims 1 to 5, wherein the outer periphery of the open end is leveled with the outer periphery of the corresponding lower cover (12 ) or upper cover (13).

11. The battery casing (10) according to any one of claims 1 to 7, wherein the open end is connected with the corresponding lower cover (12) or upper cover (13) by laser welding, and a weld joint (113) formed by welding extends through the lower cover (12) or the upper cover (13) corresponding to the open end to the casing body (11).

12. The battery casing (10) according to claim 11, wherein ½w3≤w4≤½w3, in which w3 is the thickness of the casing body (11), and w4 is the width of the casing body (113).

13. The battery casing (10) according to any one of claims 1 to 12, wherein the casing body (11) has an arc segment along a circumferential direction of the casing body (11), and the outer contour of the lower cover (12) and/or the upper cover (13) is the same in shape as that of the casing body (11).

14. The battery casing (10) according to any one of claims 1 to 13, wherein an outer surface of the casing body (11) comprises a plurality of side surfaces connected in sequence, and the areas of the upper cover (13) and the lower cover (12) are respectively larger than that of each side surface.

15. A battery (100), comprising:
a battery casing (10), the battery casing (10) being a battery casing (10) according to any one of claims 1 to 14.

16. The battery (100) according to claim 15, wherein the conductive connection region comprises a positive electrode connection region (117) and a negative electrode connection region (118);
the battery (100) further comprising an electrode core, the electrode core being arranged in the accommodating space (111), the electrode core comprising a positive electrode tab and a negative electrode tab (24), the positive electrode tab being electrically connected to the positive electrode connection region (117), and the negative electrode tab (24) being electrically connected to the negative electrode connection region (118).

17. The battery (100) according to claim 16, wherein the electrode core is a stacked electrode core.

18. The battery (100) according to claim 17, wherein the stacking direction of the electrode core is parallel to an axial direction of the electrolyte injection hole.

19. The battery (100) according to claim 18, wherein the electrode core is stacked along a direction perpendicular to the upper cover (13) or the lower cover (12), and the electrolyte injection hole (112) is provided on the upper cover (13) or the lower cover (12).

20. The battery (100) according to claim 18, wherein the electrode core is stacked along a direction parallel to the upper cover (13) or the lower cover (12), and the electrolyte injection hole (112) is provided on the casing body (11).

21. The battery (100) according to any one of claims 15 to 21, wherein the electrode core comprises a plurality of positive electrode sheets (21) and a plurality of negative electrode sheets (22), a positive electrode tab member is arranged at one end of each positive electrode sheet (21), a negative electrode tab member (24) is arranged at one end of each negative electrode sheet (22), the distance between one end of the negative electrode sheet (22) and an inner wall surface of the casing body (11) is a first distance, the distance between the other end of the negative electrode sheet (22) and the inner wall surface of the casing body (11) is a second distance, and the sum of the first distance and the second distance is not less than 2 mm, and not more than 5 mm.
